Europäisches Patentamt

European Patent Office

Office européen des brevets

(19)

(11) Publication number: **0 066 375**

**A1**

(12)

# EUROPEAN PATENT APPLICATION

(21) Application number: **82302314.8**

(22) Date of filing: **06.05.82**

(51) Int. Cl.³: **F 16 K 31/528**
**F 16 K 31/44**

(30) Priority: **29.05.81 US 268395**

(43) Date of publication of application:
**08.12.82 Bulletin 82/49**

(84) Designated Contracting States:
**FR GB SE**

(71) Applicant: **GENERAL SIGNAL CORPORATION**
**High Ridge Park**
**Stamford Connecticut 06904(US)**

(72) Inventor: **Pogatshnik, Robert J.**
**250 Riverside Avenue North**
**Sartell, Minnesota 56377(US)**

(74) Representative: **Milhench, Howard Leslie et al,**
**A.A. Thornton & Co. Northumberland House 303/306**
**High Holborn**
**London, WC1V 7LE(GB)**

(54) Means in a valve mechanism for coupling a rotary actuator to a rotary positioner.

(57) In a valve mechanism, a rotary actuator (36) is coupled to a rotary positioner (34) by means of an interface plate (20) having a rectangular centre aperture (22) and a pair of opposed elongated openings (28, 30) whose axis is parallel to the width of the centre aperture (22). The width (26) of the centre aperture (22) is substantially equal to the cross-sectional width of the rotary positioner (34) to be received therein, and the widths of the elongated openings (28, 30) are substantially equal to the diameters of the fasteners (38, 40) which mount the interface plate (20) and thereby couple the rotary positioner (34) to the rotary actuator (36).

FIG 4

EP 0 066 375 A1

- 1 -

"Means in a valve mechanism for coupling a
rotary actuator to a rotary positioner"

The present invention relates generally to valves and more specifically to an improved interface between a rotary actuator and a rotary positioner.

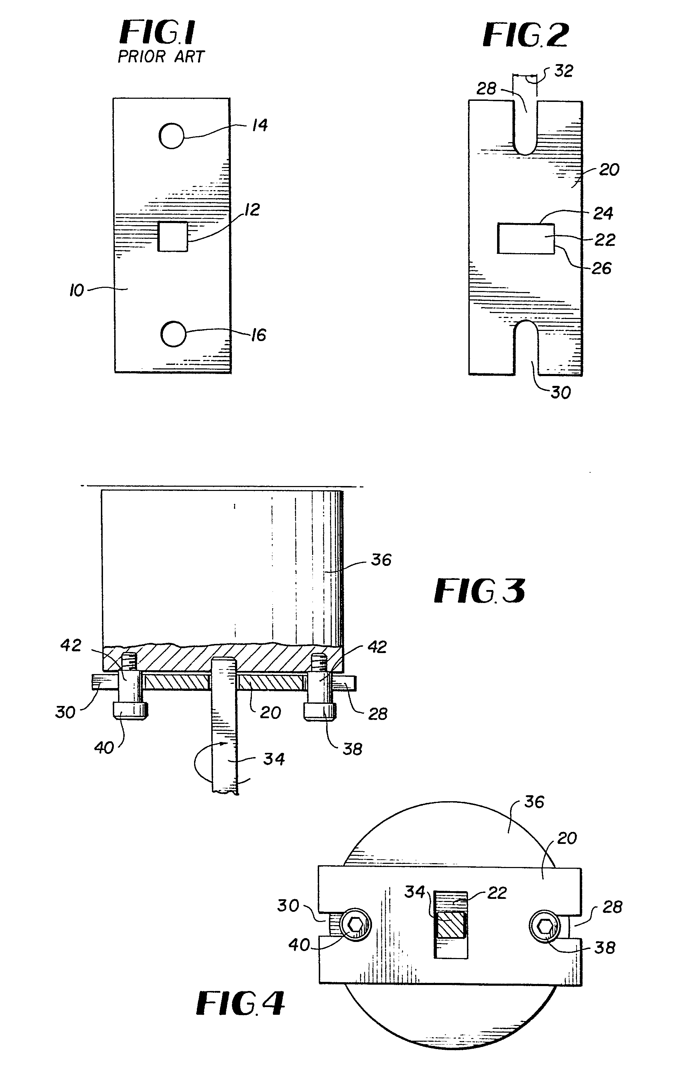

The coupling between a rotary actuator and rotary positioner of the prior art includes an interface plate 10 as illustrated in Figure 1. The plate includes a centre aperture 12 which is square having substantially the identical dimensions of the square sectioned end of the rotary positioner to be positioned therein. A pair of openings 14 and 16 are located at opposite ends of the plate and along the axis of the centre aperture 12. Fasteners, for example shoulder screws, traverse the openings 14 and 16 and secure the interface plate and the rotary positioner positioned in opening 12 to the rotary actuator. Since the dimensions and configuration of the centre opening 12 are identical to the cross-section of the end of the rotary positioner, the positioner may not be adjusted relative to the position of the interface plate 10. The openings 14 and 16 are oversized to provide a relatively loose fit between the shoulder screws and the interface plate 10. This allows for minor adjustment of this fit between the axis of the rotary actuator and the rotary positioner. The positioner is generally under spring tension which is used to exert constant pressure between the interface plate 10 and the shoulder screws to take up the clearance of the oversized openings 14 and 16. In some cases the spring tension is not great enough to take up the clearance resulting in poor valve positioning and hysteresis.

Thus, there exists the need for a new coupling means to allow for misalignment of the rotary actuator to the rotary positioner as well as to minimize the hysteresis error.

The present invention provides, in a valve mechanism wherein a rotary actuator is coupled to a rotary positioner, the improvement comprising:

an interface plate having a rectangular centre aperture whose length is greater than its width and a pair of spaced elongated openings whose axes of elongation are aligned and are parallel to said width of said centre aperture;

said width of said centre aperture being substantially equal to the width of the end of said rotary positioner positioned therein and said length of said centre aperture being greater than the length of cross-section of said end of said rotary positioner; and

a pair of fastener means extending through a respective elongated opening in said interface plate into an end of said rotary actuator for mounting said interface plate to and thereby coupling said rotary positioner to said rotary actuator.

More particularly, an embodiment of the invention comprises an interface plate having a rectangular centre opening with the length greater than the length of the cross-section of the rotary positioner and a pair of opposed elongated openings whose axes are aligned with each other and with the width of the centre aperture. A pair of fasteners extend through the respective elongated openings in the interface plate and into the end of the rotary actuator for movably mounting the interface plate and coupling the rotary positioner to the actuator. The widths of the elongated openings are substantially equal to the diameter of shoulder screws which are the fasteners. The elongated openings may extend outward to the edge of the interface plate. Preferably the cross-section of the end of the rotary valve positioner is square. The shape and dimension of the centre aperture and the elongated openings allows for relative movement in two orthogonal axes to allow misalignment between the axes of the rotary actuator and the rotary positioner while maintaining a positive drive with a minimum amount of hysteresis and positioning error.

The invention, together with features and advantages thereof, will best be understood from consideration of the following detailed descriptions given with reference to the accompanying drawings wherein:-

Figure 1 is a plan view of an interface plate of the prior art;

Figure 2 is a plan view of an exemplary interface plate incorporating the principles of the present invention;

Figure 3 is a cross-sectional view of a portion of a valve incorporating the interface plate of Figure 2; and

Figure 4 is a top view of the valve portion of Figure 3.

An interface plate 20 incorporating the principles of the present invention is illustrated in Figure 2 as including a centre aperture 22 having a length 24 and a width 26. A pair of opposed elongated openings 28 and 30 are also provided. The axes of the elongated openings 28 and 30 are aligned, are parallel to the width 26 of the centre aperture 22 and bisect the centre aperture 22. As will be evident from the consideration of Figures 3 and 4, the width 26 of the centre aperture 22 is substantially equal to the width of the cross-section of the rotary positioner shaft and the length 24 is greater than the length of the cross-section of the rotary positioner shaft. The width 32 of the elongated openings 28 and 30 is substantially equal to the diameter of the fasteners which are shoulder screws.

By providing the width 26 of the centre aperture substantially equal to the width of the cross-section of the rotary positioner, a positive interconnection or drive between the rotary positioner and the interface plate 20 is produced. By selecting the length 24 of the centre aperture 22 to be greater than the length of the cross-section of the rotary positioner, the positioner may be positioned along the length of the aperture 22. This allows relative movement of the axis of the rotary positioner relative to the interface plate 20 without affecting the direct drive. This relative positioning is provided with minimum hysteresis or position error between the rotary positioner and the interface plate 20.

The elongated openings 28 and 30 by having their elongation axis perpendicular to the length 24 of the centre aperture 22 provides for relative movement of the interface plate 20 relative to the rotary actuator along an axis orthogonal to the relative movement provided by the centre aperture 22. Since the width 32 of the elongated openings 28 and 30 is substantially equal to that of the shoulder screw which mounts the plate 20 to the rotary actuator, relative movement between the plate 20 and the rotary actuator is possible along an axis orthogonal to the relative movement of the rotary positioner on the plate while maintaining direct rotational drive. Thus, the specially designed plate 20 of Figure 2 provides relative movement in two orthogonal axes of the axis of the rotary actuator and the rotary positioner while maintaining a direct drive with minimum position error or hysteresis of two shafts. Thus, the axes of the two shafts are parallel, but need not be colinear.

Although the elongated openings are illustrated as extending to the edge of the one interface plate, they may be completely confined within the area of the interface plate 20.

As illustrated in Figures 3 and 4, the interface plate 20 receives a rotary positioner 34 in the centre aperture 22 and the elongated openings 28 and 30 have fasteners 38 and 40 traversing therethrough into the rotary actuator 36. The fasteners 38 and 40 mount the interface plate 20 to the actuator 36 while allowing the interface plate to move along the elongated axis. The cross-section of the rotary positioner shaft 34 is illustrated as a square having a width substantially equal to the width 26 of the centre opening 22. The diameter of the shoulders 42 of the fasteners 38 and 40 have a diameter substantially equal to the width 32 of the elongated openings 28 and 30. It should be noted that the interface plate 20 is a plate which is easily manufactured from stock with the centre aperture 22 and elongated openings 28 and 30 machined, stamped or formed therein. It is designed to interface with a standard rotary positioner shaft 34 having a square cross-section. The rotary actuator 36 may also be of any configuration having a flat upper face with a pair of aligned threaded openings to receive the fasteners 38 and 40. The interface plate 20 can interface standard parts and does not require uniquely designed ends of the two shafts to be coupled to provide the orthogonal relative movement.

Although the cross-section of the rotary positioner shaft 34 is illustrated as square, it may also be rectangular or other geometric shapes having at least two parallel edges as long as the length of shaft 34's cross-section is less than the length 24 of the centre aperture 22 of the plate 20. The cross-section of the rotary actuator 36 may be of any configuration.

It should be noted that the terms actuator and positioner are used herein to describe two rotary shafts to be coupled in a valve structure. They may couple a valve·actuator to the positioner mechanism, an actuator mechanism to a switch, an actuator mechanism to a potentiometer, or an actuator to a transducer. Also, the actuator and positioner may be interchanged with the input rotation being provided on the positioner and the output being taken from the actuator.

Although the present invention has been described and illustrated in detail, it is to be clearly understood that the same is by way of example and illustration only and is not to be taken ·by way of limitation. The scope of the present invention is to be limited only by the terms of the appended claims.

Claims:-

1.      In a valve mechanism having a rotary actuator coupled to a rotary positioner, the improvement comprising:

an interface plate having a rectangular centre aperture whose length is greater than its width and a pair of spaced elongated openings whose axes of elongation are aligned and are parallel to said width of said centre aperture;

said width of said centre aperture being substantially equal to the width of the end of said rotary positioner positioned therein and said length of said centre aperture being greater than the length of cross-section of said end of said rotary positioner; and

a pair of fastener means extending through a respective elongated opening in said interface plate into an end of said rotary actuator for mounting said interface plate to and thereby coupling said rotary positioner to said rotary actuator.

2.      A valve mechanism according to claim 1 wherein said elongated openings extend to the edge of said interface plate.

3.      A valve mechanism according to claim 1 or 2 wherein said fastener means are shoulder screws and the width of said elongated openings is substantially equal to the diameter of said shoulder screws.

4.      A valve mechanism according to any preceding claim wherein said end of said rotary positioner has a cross-section having two parallel edges the separation of which defines said width.

5.    A valve mechanism according to claim 4 wherein said end of said rotary positioner has a square cross-section.

FIG.1
PRIOR ART

FIG.2

FIG.3

FIG.4

0066375

1/1

| Category | Citation of document with indication, where appropriate, of relevant passages | Relevant to claim |
|---|---|---|
| A | <u>DE - C - 54 562</u> (E. VOGT)<br><br>* Page 1, column 2, line 4 – page 2, column 1, line 16; fig. 6-8 *<br><br>-- | 1,2,4, 5 |
| A | <u>US - A - 3 643 051</u> (D. FOLEY)<br><br>* Fig. 2 *<br><br>---- | 1,2 |

**DOCUMENTS CONSIDERED TO BE RELEVANT**

CLASSIFICATION OF THE APPLICATION (Int. Cl. 3)

F 16 K 31/528
F 16 K 31/44

TECHNICAL FIELDS SEARCHED (Int.Cl. 3)

F 16 K 31/00
F 16 D 11/00
F 16 B 1/00
F 16 B 2/00
H 01 H 3/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | | |
|---|---|---|---|
| X | The present search report has been drawn up for all claims | | |

| Place of search | Date of completion of the search | Examiner |
|---|---|---|
| VIENNA | 07-09-1982 | ROUSSARIAN |

EPO Form 1503.1   06.78